Europäisches Patentamt

European Patent Office

Office européen des brevets

(19)

(11) **EP 1 180 273 B1**

(12) **EUROPÄISCHE PATENTSCHRIFT**

(45) Veröffentlichungstag und Bekanntmachung des Hinweises auf die Patenterteilung:
**20.07.2005 Patentblatt 2005/29**

(21) Anmeldenummer: **00943632.0**

(22) Anmeldetag: **24.05.2000**

(51) Int Cl.⁷: **H04J 3/16**

(86) Internationale Anmeldenummer:
**PCT/DE2000/001665**

(87) Internationale Veröffentlichungsnummer:
**WO 2000/074286 (07.12.2000 Gazette 2000/49)**

(54) **ANORDNUNG UND VERFAHREN ZUM ÜBERTRAGEN VON DATEN**

SYSTEM AND METHOD FOR TRANSMITTING DATA

DISPOSITIF ET PROCEDE POUR LE TRANSFERT DE DONNEES

(84) Benannte Vertragsstaaten:
**DE FR GB IT**

(30) Priorität: **02.06.1999 DE 19925423**

(43) Veröffentlichungstag der Anmeldung:
**20.02.2002 Patentblatt 2002/08**

(73) Patentinhaber: **SIEMENS AKTIENGESELLSCHAFT**
**80333 München (DE)**

(72) Erfinder: **MÜLLER, Horst**
**D-82069 Hohenschäftlarn (DE)**

(56) Entgegenhaltungen:
**EP-A- 0 656 704      EP-A- 0 693 833**
**EP-A- 0 883 323      CN-A- 1 250 294**
**US-A- 5 383 196      US-A- 5 675 580**

**Beschreibung**

Datenendgeräte wie z.B. Router oder Switche haben für lokale Anwendungen wie z.B. LAN-Netze eine Schnittstelle, die in der Empfehlung IEEE Draft P802.3z als 1000BASE-X Schnittstelle bezeichnet wird. Diese als Gigabit Ethernet Schnittstelle bezeichnete Schnittstelle bringt jedoch den Nachteil mit sich, daß über sie nur Geräte in einem begrenzten Umkreis von beispielsweise 100 Metern versorgt werden können.

Ausgehend von einer nominelle Bitrate von 1 Gbit/s des Gigabit Ethernet Signals, wird das Gigabit Ethernet Signal entsprechend IEEE Draft P802.3z einer 8B/10B-Codierung unterworfen, wodurch die Bitrate von 1 Gbit/s auf 1,25 Gbit/s erhöht wird. Durch diese Codierung werden möglichst viele Signalübergänge und eine Gleichstromfreiheit des Signals erreicht, die wiederum eine einfachere Regeneration des Signals und Taktrückgewinnung auf einer Empfangsseite ermöglicht.

Der Transport der Ethernet Signale im Gigabitbereich erfolgt zu anderen Netzen wie MAN bzw. WAN-Netze beispielsweise über Übertragungsnetze. Üblicherweise werden für diese Übertragungsnetze in Europa Übertragungssysteme eingesetzt, die nach der Synchronen Digital Hierarchie SDH entsprechend der ITU-Empfehlung G.707 arbeiten. In USA arbeiten diese Systeme nach der SONET-Norm, die ebenfalls in G.707 festgelegt ist.

Aus der EP 0 693 833 AI ist ein Verfahren bekannt bei dem ein 1.544 Mbit/s bzw. 2,084 Mbit/s Signal ein SONET-Overhead und ein Rahmenkennungswort zugefügt werden, um diese Signale über normale Telefonleitungen mit 2,048 bis 2.688 Mbit/s übertragen zu können.

Der Erfindung liegt die Aufgabe zugrunde, eine weitere Anordnung und ein dazugehöriges Verfahren zur Einfügung, Rückgewinnung und Übertragung von Ethernet Signale anzugeben.

Die Lösung der Aufgabe ergibt sich aus den Merkmalen des Patentanspruchs 1, 2, 3 oder 7, 8.

Die Erfindung bringt neben dem Vorteil, daß für die Übertragung von Gigabit Ethernet Signalen das breitflächig vorhandene SDH-Übertragungsnetz verwendet werden kann, den weiteren Vorteil mit sich, daß STM-Rahmen zum Datentransport verwendet werden und daß die Kapazität eines STM-N Signals optimal ausgenützt wird.

Die Erfindung bringt den Vorteil mit sich, daß für die Übertragung eines Gigabit Ethernet Signals nur acht VC-4 Container eines STM-N Signals belegt werden, so daß z.B. in einem STM-16 Signal bis zu zwei Gigabit Ethernet Signale bzw. in einem STM-64 Signal bis zu acht Gigabit Ethernet Signale übertragen werden können.

Weitere Besonderheiten sind in den Unteransprüchen angegeben.

Die Anordnung und das dazugehörige Verfahren wird aus der nachfolgenden näheren Erläuterung zu Ausführungsbeispielen anhand von Zeichnungen ersichtlich.

Es zeigen:

Figur 1    eine Übertragungsstrecke für ein Gigabit Ethernet Signal,
Figur 2    einen STM-N Rahmen mit einer Zeile eines Signals und
Figur 3    eine Verkettung von Signalen.

Nachfolgend wird von einem Gigabit Ethernet Signal mit einer Bitrate von 1,25 Gbit/s ausgegangen. Nach der Empfehlung G.707 sind für STM-16 Signale eine Bitrate mit 2,488320 Gbit/s und für STM-64 Signale eine Bitrate mit 9,953280 Gbit/s festgelegt.

In der nachfolgenden Beschreibung wird ein Weg gezeigt wie die Übertragungskapazität eines STM-N Signals, beispielsweise ein STM-16 Signal zum Transport von mindestens zwei Gigabit Ethernet Signalen erzeugt wird.

Beim Verfahren gemäß der Erfindung wird die Bitrate eines Gigabit Ethernet Signals in nachfolgend beschriebener Form reduziert, um die in der Empfehlung angegebenen Grunddaten für STM-N Signale erreichen zu können.

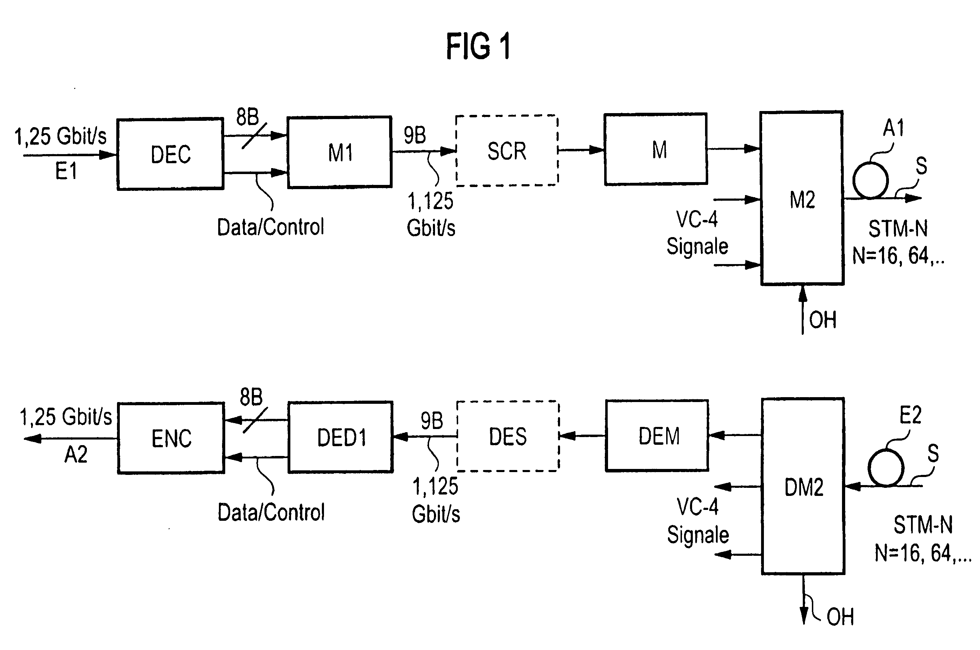

Wie in Fig. 1 dargestellt wird das 1,25 Gbit/s Ethernet Signal E1 vor der Übertragung über das Übertragungsnetz S einem 10B/8B Decoder DEC, einem ersten Multiplexer M1, einem Zusammensteller M und einem zweiten Multiplexer M2 zugeführt. Der dem 10B/8B Decoder DEC nachfolgende erste Multiplexer M1 faßt die 8bit Datenwörter und die Kontrollinformation zu einem 9bit Signal 9B zusammen, wobei den Datenwörtern am Ausgang des Decoders DEC je nachdem, ob es sich um ein Datenwort oder ein Wort einer Kontrollinformation handelt, ein Bit jeweils hinzugefügt wird.

Ein Datenwort wird z.B. durch ein Bit mit dem logischen Wert "1", ein Wort einer Kontrollinformation durch ein Bit mit dem logischen Wert "0" markiert. Durch die Zusammenfassung des Ausgangssignals des Decodierers DEC durch den Multiplexer M1 entsteht ein Signal mit einer 8B/9B-Codierung. Die Bitrate von 1,25 Gbit/s die am Eingang des Decoders DEC anliegt wird in dem ersten Multiplexer M1 in ein Signal mit einer Datenrate von 1,125 Gbit/s umgesetzt.

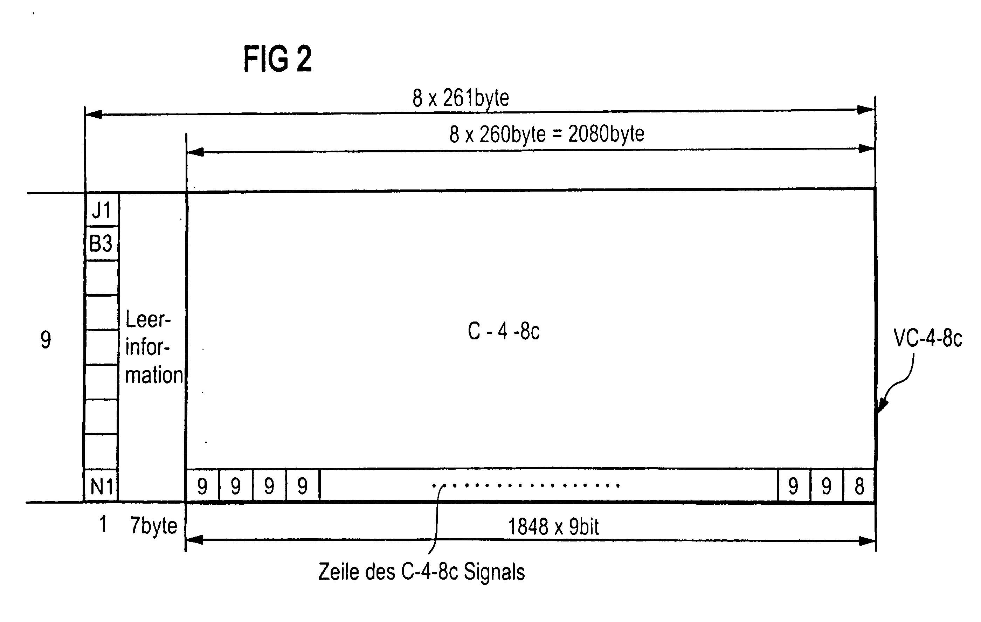

Während einer Periode eines STM-Rahmens mit 8 kHz Rahmenfrequenz und 9 Zeilen pro Rahmen (siehe Fig.2) liefert ein Gigabit Ethernet Signal eine Anzahl von 15625 Bit. Die Anzahl der Bits pro Rahmenzeile des STM-N Signals ergibt sich aus nachfolgender Rechnung:

$$1,125 * 10^9 : 8\ 000 : 9 = 15625\ \text{Bit}.$$

Das Ausgangssignal des ersten Multiplexers M1 kann über einen Scrambler SCR oder direkt an den Zusammensteller M, der nachfolgend als Mapper und in der Empfangsrichtung nach der Übertragungsstrecke S als Demapper DEM bezeichnet wird, weitergeleitet werden. Das Ausgangssignal des Mappers M, eine erste Signalfolge, gebildet aus contiguous oder virtuell verketteten Signalen VC-4-8c, VC-4-8v, wird gemeinsam mit weiteren ersten Signalfolgen in einem zweiten Multiplexer M2 unter Hinzufügung von SDH spezifischen Overheadinformationen OH zu einem STM-N Signal (N = 16, 64, 256, ...) ergänzt.

In Empfangsrichtung werden nach einer Übertragungsstrecke S aus den Signalen zunächst in einem ersten Demultiplexer DM2 die Overheadinformationen OH aus dem STM-N Signal entfernt und einzelne erste Signalfolgen VC-4 gebildet. In dem Demapper DEM wird aus dem contiguous oder virtuell verketteten Signal VC-4-8c/VC-4-8v analog zur Senderichtung das 1,125 Gbit/s Signal zurückgewonnen. Im Falle einer virtuellen Verkettung von VC-4 Signalen müssen, wie in der europäischen Patentschrift EP 0429888 B1 näher beschrieben unterschiedliche Laufzeiten der verketteten VC-4 Signale in geeigneten Pufferspeichern ausgeglichen werden. Falls das 1,125 Gbit/s Signal sendeseitig verschachtelt (verscrambelt) wurde, muß dies in einem Descrambler DES rückgängig gemacht werden.

Nach dem Demapper DEM oder dem Descrambler DES folgt ein zweiter Demultiplexer DED1, der ein 8bit Signal 8B, sowie eine Information, ob es sich um Daten oder Kontrollinformationen handelt abgibt. Ein nachfolgender 8B/10B Entcoder ENC erzeugt daraus ein Ethenet Signals mit einer Datenrate von 1,25 Gbit/s entsprechend dem in IEEE Draft P802.3z festgelegten Verfahren.

Bei einer Übertragung innerhalb eines STM-N Signals kann anstelle der 8B/10B - Codierung ein Scrambler verwendet werden, der ebenfalls für genügend häufige Signalübergänge sorgt.

Die 8B/10B-Codierung ist in der Empfehlung IEEE Draft P802.3z in Table 36-1a bis 1e und Table 36-2 für Kontrollinformationen beschrieben.

Nachfolgend wird eine Aufteilung einer Zeile eines STM-Rahmens erläutert:

Aus der oben gebildeten Bitfolge können 1736,1111 x 9 bit Kombinationen gebildet werden.

Da eine Zeile eines STM-Rahmens eine Übertragungskapazität von 1848 x 9 bit aufweist, kann wie in nachfolgender Tabelle eine Aufteilung von Nutz-, Stopf-, Stopfkontroll- und Leerinformation beispielhaft aufgeführt gewählt werden:

| | |
|---|---|
| 1735 | x 9bit Nutzinformation |
| 2 | x 9bit Stopfinformation |
| 6 | x 9bit Stopfkontrollinformation |
| 105 | x 9bit Leerinformation (Fix stuff) |
| 1848 | x 9bit Summe |

Die maximal zulässige Frequenzabweichung des Gigabit Ethernet Signals kann entsprechend IEEE Draft P802.3z +/-100 ppm (parts per million) betragen. Mit dem Vorschlag pro Zeile zwei Stopfinformationen ä 9bit vorzusehen, können pro Zeile 1735 bis 1737 x 9bit Nutzinformation übertragen werden. Das Gigabit Ethernet Signal darf somit in folgendem Frequenzbereich liegen:

1735 x 9 x 9 x 8000 = 1,124 280 Gbit/s bis

1735 x 9 x 9 x 8000 = 1,125 576 Gbit/s.

Dies entspricht einer zulässigen Frequenzabweichung des Gigabit Ethernet Signals von +512 ppm bzw. -640 ppm, womit obige Forderung von +-100 ppm sicher erfüllt ist.

Je nach Zustand der beiden Stopfkontrollinformationen C1 und C2 können pro Zeile 1735 oder 1737 x 9bit Nutzinformation übertragen werden. Haben die drei Stopfkontrollinformationen C1 z.B. jeweils die Kombination 000000000, so wird angezeigt, daß das 9bit Wort S1 in der Zeile eine Nutzinformation beinhaltet, während bei einer Belegung mit 111111111 das 9bit Wort S1 Stopfbits, also keine Nutzinformation beinhaltet. Gleiches gilt für die Stopfkontrollinformationen C2 und die Stopfinformation S2. Um gegen Einzel- und Bündelfehler bei der Stopfkontrollinformation sicher zu sein, wird in einer vorteilhaften Ausgestaltung eine Mehrheitsentscheidung durchgeführt.

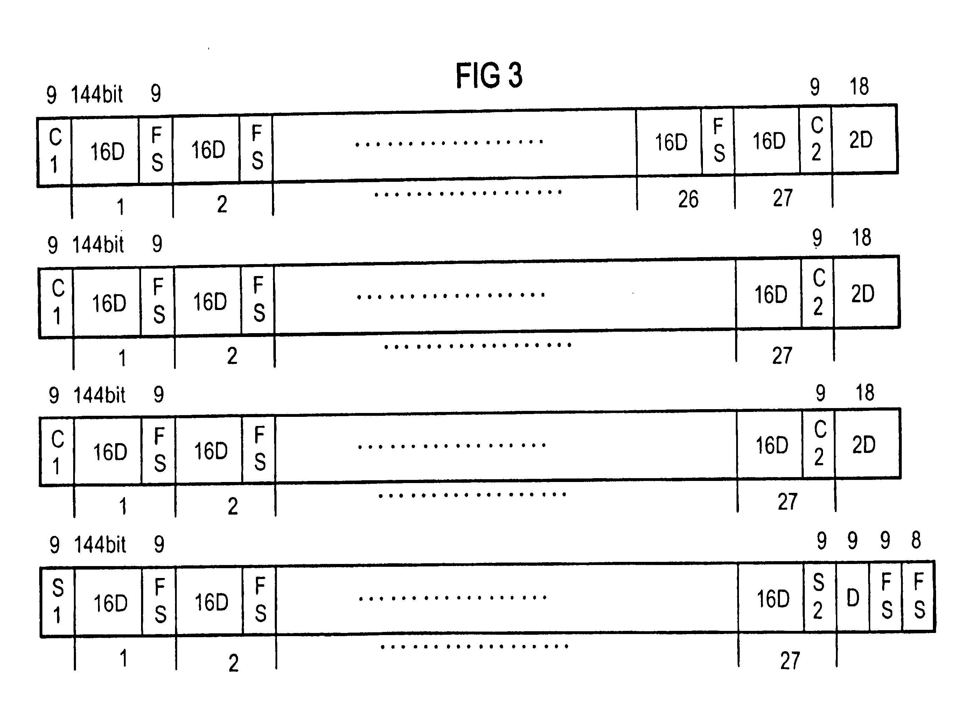

In Figur 2 ist die Aufteilung einer Bitfolge einer Zeile des C-4-8c Signals in einem STM-Rahmen dargestellt. Eine Zeile des Nutzdatensignals in dem STM-Rahmens ist 2080byte lang und wird wie in Figur 3 gezeigt in vier Untergruppen aufgeteilt. Die vierte Untergruppe wird mit einer Leerinformation FS abgeschlossen.

In Figur 3 ist eine detaillierte Aufteilung einer aus 2080 Byte gebildeten Zeile gezeigt. Diese Zeile wird in vier Untergruppen unterteilt, wobei die ersten drei Untergruppen identisch sind und jeweils mit einer ersten 9bit Stopfkontrollinformation C1 beginnen. Es folgen in diesen drei Untergruppen jeweils 144bit Nutzdaten, die in 16 x 9bit Gruppen D16 übertragen werden. Den Nutzdaten folgt jeweils eine 9bit lange Leerinformation FS (Fix stuff). Die Kombination, gebildet aus den Nutzdaten 16D und der Leerinformation FS wird 26 mal je Untergruppe wiederholt. Es folgen jeweils weitere 16D Nutzdatengruppen mit einer zweiten Stopfkontrollinformation C2. Die ersten drei Untergruppen enden jeweils mit der Übertragung von zwei Nutzdatengruppen D mit jeweils 18bit.

Die vierte Untergruppe beginnt mit einer Stopfinformation S1. Es folgen wie jeweils in den ersten drei Untergruppen 26mal die Kombination 16D Nutzdateninformationen mit einer 9bit Leerinformation FS. Nach weiteren 16D Nutzdatengruppen folgt die Stopfinformation S2. Nach einer Nutzdatengruppe D mit 9 Bit folgen zwei Abschnitte Leerinformation FS zu je 9bit.

**Patentansprüche**

1. Anordnung zur Einfügung von Ethernet Signalen in einem STM-N Signal der Synchronen Digitalen Hierarchie (SDH) mit einem Decoder (DEC) zur Reduktion der Datenrate eines an seinem Eingang anliegenden Ethernet Signals (E1),
einem ersten Multiplexer (M1) zur Bildung von Datenwörtern aus den von dem Decoder (DEC) abgegebenen Daten und den dazugehöriger Kontrollinformationen,
einer Einheit (M) zur Bildung einer ersten Signalfolge (VC-4) vorbestimmter Bitlänge aus den an einem Ausgang des Multiplexers anliegenden Datenwörtern und
einem zweiten Multiplexer (M2) zur Zusammenfassung von mindestens einer ersten Signalfolge (VC-4) und eine Hinzufügung von einen STM-N Rahmen bildenden Steuer- und Verwaltungsdaten.

2. Anordnung zur Rückgewinnung von in STM-N Rahmen der Synchronen Digitalen Hierachie (SDH) eingefügten Ethernet Signalen mit
einem ersten Demultiplexer (DM2) zur Bildung mindestens einer ersten Signalfolge (VC-4),
einem Demapper (DEM) zur Bildung eines Ethernet Signals mit einer reduzierten Datenrate,
einem zweiten Demultiplexer (DED1) zur Bildung von Datenwörtern und dazugehörigen Kontrollinformationen und
einem Encoder (ENC) zur Bildung eines Ethernet Signals.

3. Anordnung zum Übertragen von Ethernet Signalen mit den Merkmalen der Ansprüche 1 und 2.

4. Anordnung nach Anspruch 3,
**dadurch gekennzeichnet,**
**daß** ein Scrambler (SCR) zur Verwürfelung der Daten zwischen dem ersten Multiplexer (M1) und den Mapper (M) vorgesehen ist,
**daß** ein Descrambler (DES) zwischen dem ersten Demultiplexer (DM2) und dem zweiten Demultiplexer (DED1) vorgesehen ist.

5. Anordnung nach Anspruch 1,
**dadurch gekennzeichnet,**
**daß** der erste Multiplexer (M1) Datenwörter mit einer Datenwortlänge von 9 Bit bildet.

6. Anordnung nach Anspruch 1,
**dadurch gekennzeichnet,**
**daß** die Einheit (M) zur Bildung einer ersten Signalfolge (VC4) vorbestimmter Bitlänge ein contiguous oder ein virtuell verkettetes Signal (VC-4-8c, VC-4-8v) bildet.

7. Verfahren zur Einfügung von Ethernet Signalen in einem STM-N Signal der Synchronen Digitalen Hierarchie (SDH) mit den Verfahrensschritten:

daß eine Reduktion der Datenrate des Ethernet Signals durchgeführt wird,
daß die Daten nach der Reduktion der Datenrate und die dazugehörigen Kontrollinformationen in Datenwörter zusammengefaßt und eine erste Signalfolge (VC-4) bestimmter Bitlänge erzeugt wird, und
daß ein STM-N Signal aus mindestens einer ersten Signalfolge (VC-4) und zu einem STM-N Rahmen gehörende Steuer- und Verwaltungsdaten (OH) gebildet wird.

8. Verfahren zur Rückgewinnung von in STM-N Signalen der Synchronen Digitalen Hierachie (SDH) eingefügten Ethernet Signalen mit den Verfahrensschritten,
daß eine erste Signalfolge (VC-4) aus dem STM-N Signal extrahiert wird,
daß aus der ersten Signalfolge (VC-4) ein Ethernet Signal mit einer reduzierten Datenrate gebildet wird,
daß aus dem Ethernet Signal mit einer reduzierten Datenrate Datenwörter und dazugehörige Kontrollinformationen gebildet und daß die Datenwörter und die dazugehörigen Kontrollinformationen zu einem Ethernet Signal gebildet werden.

9. Verfahren nach einem der vorhergehenden Ansprüche,
**dadurch gekennzeichnet,**
**daß** die Zeile eines STM-N Rahmens in eine 9bit Struktur gegliedert wird, wobei die 9bit der Nutzdaten synchron in den STM-N Rahmen abgelegt werden.

10. Verfahren nach Anspruch 7,
**dadurch gekennzeichnet,**
**daß** die erste Signalfolge (VC-4) in vier Untergruppen gegliedert wird, wobei die ersten drei Untergruppen identisch ausgebildet sind,
**daß** die ersten drei Untergruppen jeweils mit einer ersten 9bit Stopfkontrollinformation C1 beginnen und mit einer zweiten Stopfkontrollinformation C2 sowie zwei Nutzdatengruppen D enden,
**daß** zwischen den ersten und zweiten Stopfkontrollinformationen (C1, C2) Nutzdaten (16D) und Leerinformationen (FS) angeordnet sind.

11. Verfahren nach Anspruch 10,
**dadurch gekennzeichnet,**
**daß** die Nutzdaten (16D) jeweils aus 144bit bestehen und in Gruppen zu 16 x 9bit gebündelt werden.

**12.** Verfahren nach Anspruch 10 oder 11,
**dadurch gekennzeichnet,**
**daß** die Nutzdaten zwischen den Stopfkontrollinformationen bis auf die unmittelbar an die Stopfkontrollinformationen anschließenden Nutzdaten mit einer Leerinformation (FS) abgeschlossen werden.

**13.** Verfahren nach Anspruch 10,
**dadurch gekennzeichnet,**
**daß** eine vierte Untergruppe mit einer Stopfinformation S1 beginnt und mit einer Stopfinformation (S2), einer Nutzdatengruppe (D) und Leerinformation (FS) endet,
**daß** zwischen den ersten und zweiten Stopfinformationen (S1, S2) Nutzdaten (16D) und Leerinformationen (FS) angeordnet sind.

## Claims

**1.** Arrangement for inserting Ethernet signals in an STM-N signal in the synchronous digital hierarchy (SDH) with a decoder (DEC) for reduction of the data rate of an Ethernet signal (E1) applied to its input, having a first multiplexer (M1) for forming data words from the data emitted from the decoder (DEC) and from the associated monitoring information, having a unit (M) for forming a first signal sequence (VC-4) with a predetermined bit length from the data words applied to an input of the multiplexer, and having a second multiplexer (M2) for combining at least one first signal sequence (VC-4) and adding control and administration data formed by an STM-N frame.

**2.** Arrangement for recovering Ethernet signals inserted into STM-N frames of the synchronous digital hierarchy (SDH),
having a first demultiplexer (DM2) for forming at least one first signal sequence (VC-4),
having a demapper (DEM) for forming an Ethernet signal at a reduced data rate,
having a second demultiplexer (DED1) for forming data works and associated monitoring information, and
having an encoder (ENC) for forming an Ethernet signal.

**3.** Arrangement for transmitting Ethernet signals having the features of Claims 1 and 2.

**4.** Arrangement according to Claim 3,
**characterized**
**in that** a scrambler (SCR) is provided for scrambling the data between the first multiplexer (M1) and the mapper (M),
**in that** a descrambler (DES) is provided between the first demultiplexer (DM2) and the second demultiplexer (DED1).

**5.** Arrangement according to Claim 1,
**characterized**
**in that** the first multiplexer (M1) forms data words with a data word length of 9 bits.

**6.** Arrangement according to Claim 1,
**characterized**
**in that** the unit (M) for forming a first signal sequence (VC4) with a predetermined bit length forms a contiguously concatenated signal (VC-4-8c) or a virtually concatenated signal (VC-4-8v).

**7.** Method for inserting Ethernet signals into an STM-N signal of the synchronous digital hierarchy (SDH) having the following method steps:
in that a reduction is carried out in the data rate of the Ethernet signal,
in that after the reduction of the data rate, the data and the associated monitoring information are combined into data words, and a first signal sequence (VC-4) with a specific bit length is produced, and
in that an STM-N signal is formed from at least one first signal sequence (VC-4) and control and administration data (OH) associated with an STM-N frame.

**8.** Method for recovering Ethernet signals inserted into STM-N signals of the synchronous digital hierarchy (SDH), having the following method steps,
in that a first signal sequence (VC-4) is extracted from the STM-N signal,
in that an Ethernet signal at a reduced data rate is formed from the first signal sequence (VC-4),
in that data words and associated control information are formed from the Ethernet signal at a reduced data rate,
and in that the data words and the associated monitoring information are used to form an Ethernet signal.

**9.** Method according to one of the previous claims,
**characterized**
**in that** the line of an STM-N frame is broken down into a 9-bit structure, with the 9 bits of user data being placed synchronously in the STM-N frame.

**10.** Method according to Claim 7,
**characterized**
**in that** the first signal sequence (VC-4) is broken down into four subgroups, with the first three subgroups being identical,
**in that** the first three subgroups each start with a first 9-bit stuffing monitoring information item C1, and end with a second stuffing monitoring information item C2 and with two user data groups D,

**in that** user data (16D) and blank information (FS) are arranged between the first and the second stuffing monitoring information items (C1, C2).

11. Method according to Claim 10,
 **characterized**
 **in that** the user data (16D) in each case comprises 144 bits and is bundled to form groups of 16 x 9 bits.

12. Method according to Claim 10 or 11,
 **characterized**
 **in that** the user data is terminated by blank information (FS) between the stuffing monitoring information items and the user data which directly follows the stuffing information items.

13. Method according to Claim 10,
 **characterized**
 **in that** a fourth subgroup starts with a stuffing information item S1 and ends with a stuffing information item (S2), a user data group (D) and blank information (FS),
 **in that** user data (16D) and blank information (FS) are arranged between the first and second stuffing information items (S1, S2).

**Revendications**

1. Dispositif pour l'insertion de signaux Ethernet dans un signal STM-N de la hiérarchie numérique synchrone (SDH), comprenant un décodeur (DEC) pour la réduction du débit de données d'un signal Ethernet (E1) appliqué à son entrée,
 un premier multiplexeur (M1) pour la formation de mots de données à partir des données fournies par le décodeur (DEC) et des informations de contrôle correspondantes,
 une unité (M) pour la formation d'une première suite de signaux (VC-4) de longueur binaire prédéterminée à partir des mots de données appliqués à une sortie du multiplexeur et
 un second multiplexeur (M2) pour la compilation d'au moins une première suite de signaux (VC-4) et un ajout de données de commande et de gestion formant une trame STM-N.

2. Dispositif pour la récupération de signaux Ethernet insérés dans une trame STM-N de la hiérarchie numérique synchrone (SDH), comprenant
 un premier démultiplexeur (DM2) pour la formation d'au moins une première suite de signaux (VC-4),
 un démappeur (DEM) pour la formation d'un signal Ethernet de débit de données réduit,
 un second démultiplexeur (DED1) pour la formation de mots de données et d'informations de contrôle correspondantes et
 un codeur (ENC) pour la formation d'un signal Ethernet.

3. Dispositif pour la transmission de signaux Ethernet, possédant les caractéristiques des revendications 1 et 2.

4. Dispositif selon la revendication 3,
 **caractérisé en ce que** l'on prévoit un brouilleur (SCR) pour le hachage des données entre le premier multiplexeur (M1) et le mappeur (M),
 **en ce que** l'on prévoit un débrouilleur (DES) entre le premier démultiplexeur (DM2) et le second démultiplexeur (DED1).

5. Dispositif selon la revendication 1,
 **caractérisé en ce que** le premier multiplexeur (M1) forme des mots de données d'une longueur de 9 bits.

6. Dispositif selon la revendication 1,
 **caractérisé en ce que** l'unité (M) pour former une première suite de signaux (VC-4) de longueur binaire prédéterminée forme un signal concaténé de manière contiguë ou virtuelle (VC-4-8c, VC-4-8v).

7. Procédé d'insertion de signaux Ethernet dans un signal STM-N de la hiérarchie numérique synchrone (SDH), comprenant les étapes de procédé :

 procéder à une réduction du débit de données du signal Ethernet,
 compiler les données, après la réduction du débit de données, et les informations de contrôle correspondantes en mots de données et produire une première suite de signaux (VC-4) de longueur binaire déterminée, et
 former un signal STM-N à partir d'au moins une première suite de signaux (VC-4) et de données de commande et de gestion (OH) appartenant à une trame STM-N.

8. Procédé de récupération de signaux Ethernet insérés dans des signaux STM-N de la hiérarchie numérique synchrone (SDH), comprenant les étapes de procédé :

 extraire une première suite de signaux (VC-4) du signal STM-N,
 former un signal Ethernet de débit de données réduit à partir de la première suite de signaux (VC-4),
 former des mots de données et les informations de contrôle correspondantes à partir du signal Ethernet de débit de données réduit et former un signal Ethernet avec les mots de données et les informations de contrôle correspondantes.

**9.** Procédé selon l'une des revendications précédentes,
**caractérisé en ce**
**que** les lignes d'une trame STM-N sont organisées en une structure à 9 bits, les 9 bits des données utiles étant déposés de manière synchrone dans la trame STM-N.

**10.** Procédé selon la revendication 7,
**caractérisé**
**en ce**
**que** la première suite de signaux (VC-4) est structurée en quatre sous-groupes, les trois premiers sous-groupes étant formés de manière identique, en ce que les trois premiers sous-groupes commencent à chaque fois par une première information de contrôle de bourrage C1 de 9 bits et se terminent par une seconde information de contrôle de bourrage C2 et deux groupes de données utiles D, en ce que des données utiles (16D) et des informations vides (FS) se trouvent entre la première et la seconde informations de contrôle de bourrage (C1, C2).

**11.** Procédé selon la revendication 10,
**caractérisé en ce**
**que** les données utiles (16D) sont constituées à chaque fois de 144 bits et rassemblées en groupes de 16 fois 9 bits.

**12.** Procédé selon la revendication 10 ou 11,
**caractérisé en ce**
**que** les données utiles se trouvant entre les informations de contrôle de bourrage se terminent par une information vide (FS), à l'exception des données utiles directement contiguës aux informations de contrôle de bourrage.

**13.** Procédé selon la revendication 10,
**caractérisé en ce**
**qu'**un quatrième sous-groupe commence par une information de bourrage S1 et se termine par une information de bourrage (S2), un groupe de données utiles (D) et une information vide (FS),
**que** des données utiles (16D) et des informations utiles (FS) se trouvent entre la première et la seconde informations de bourrage (S1, S2).

# FIG 1

EP 1 180 273 B1

## FIG 2

EP 1 180 273 B1

8 x 261byte

8 x 260byte = 2080byte

| J1 | |
|----|--|
| B3 | |

Leer-infor-mation

9

C - 4 -8c

VC-4-8c

N1

9 9 9 9 ·················· 9 9 8

1 7byte

1848 x 9bit

Zeile des C-4-8c Signals

# FIG 3

| 9 | 144bit | 9 | | | | | | | 9 | 18 |
|---|---|---|---|---|---|---|---|---|---|---|

| C 1 | 16D | F S | 16D | F S | ················· | 16D | F S | 16D | C 2 | 2D |
| | 1 | | 2 | | ················· | 26 | | 27 | | |

| 9 | 144bit | 9 | | | | | 9 | 18 |
|---|---|---|---|---|---|---|---|---|

| C 1 | 16D | F S | 16D | F S | ················· | 16D | C 2 | 2D |
| | 1 | | 2 | | ················· | 27 | | |

| 9 | 144bit | 9 | | | | | 9 | 18 |
|---|---|---|---|---|---|---|---|---|

| C 1 | 16D | F S | 16D | F S | ················· | 16D | C 2 | 2D |
| | 1 | | 2 | | ················· | 27 | | |

| 9 | 144bit | 9 | | | | | 9 | 9 | 9 | 8 |
|---|---|---|---|---|---|---|---|---|---|---|

| S 1 | 16D | F S | 16D | F S | ················· | 16D | S 2 | D | F S | F S |
| | 1 | | 2 | | ················· | 27 | | | | |

EP 1 180 273 B1